# FASCICULE DE BREVET EUROPEEN

(11) **EP 4 127 417 B1**
(45) Date de publication et mention de la délivrance du brevet: **24.04.2024**
(21) Numéro de dépôt: 21720807.3
(22) Date de dépôt: 26.03.2021
(51) Int. Cl.: F01D 25/18, F01D 25/20, F02C 7/36, F02C 7/06, F01D 21/00, F02C 7/32

(54) **ENSEMBLE POUR TURBOMACHINE D'AÉRONEF COMPORTANT UN SYSTÈME AMELIORÉ DE LUBRIFICATION D'UN RÉDUCTEUR D'ENTRAINEMENT DE SOUFFLANTE**
FLUGGASTURBINENAUFBAU WELCHER EIN VERBESSERTES SCHMIERSYSTEM EINES EIN GEBLÄSE ANTREIBENDES UNTERSETZUNGSGETRIEBES UMFASST
AIRCRAFT TURBINE ENGINE ASSEMBLY COMPRISING AN IMPROVED LUBRICATION SYSTEM OF A FAN DRIVING REDUCTION GEAR BOX

(30) Priorité: 02.04.2020 FR 2003309
(43) Date de publication de la demande: 08.02.2023
(73) Titulaire: SAFRAN AIRCRAFT ENGINES, 75015 Paris (FR)
(72) Inventeur: BOUTALEB, Mohammed-Lamine, 77550 MOISSY-CRAMAYEL (FR); COTEREAU, Nicolas Vincent Pierre-Yves, 77550 MOISSY-CRAMAYEL (FR); ORIOL, Sébastien, 77550 MOISSY-CRAMAYEL (FR)
(74) Mandataire: Brevalex
(86) Numéro de dépôt international: PCT/FR2021/050540
(87) Numéro de publication internationale: WO 2021/198602

(56) Documents cités:
- WO-A1-2019/243710
- FR-A1- 3 083 266

## Description

### DOMAINE TECHNIQUE

La présente invention se rapporte au domaine des turbomachines d'aéronef, et plus précisément aux turbomachines comprenant une soufflante entraînée par un réducteur, tel que cela est par exemple connu du document FR 2 987 402 A1, ou FR 3 083 266 A1.

L'invention concerne en particulier la gestion de la lubrification du réducteur, en cas d'autorotation de la soufflante.

### ETAT DE LA TECHNIQUE ANTERIEURE

Sur les turbomachines d'aéronef comprenant une soufflante entraînée par un réducteur, ce dernier est généralement agencé dans une enceinte lubrifiée à travers laquelle circule du lubrifiant amené par une pompe d'alimentation. Cette pompe est entraînée mécaniquement par un arbre de la turbomachine, habituellement l'arbre haute pression. En cas d'extinction de la turbomachine durant le vol, la soufflante n'est plus entraînée par le réducteur, mais elle continue de tourner sous l'effet de l'air qui la traverse. Dans ces conditions, la soufflante est dite en autorotation, ou encore en « windmilling » ou « en moulinet ». Ces conditions peuvent également être rencontrées au sol, lorsque la turbomachine est éteinte.

Même si les vitesses d'autorotation de la soufflante restent relativement peu élevées, en particulier quand l'aéronef est au sol, il peut néanmoins subsister un besoin de lubrification du réducteur entraîné par cette soufflante. La lubrification du réducteur ne peut cependant plus être assurée par la seule pompe d'alimentation, car l'arbre haute pression est à l'arrêt ou tourne à une vitesse trop faible pour permettre à cette pompe d'introduire un débit de lubrifiant suffisamment élevé dans l'enceinte.

Les solutions existantes pour assurer la lubrification du réducteur dans ces conditions mettent généralement en place un circuit d'huile secondaire avec un réservoir auxiliaire, et une pompe auxiliaire associée. Un circuit d'huile secondaire présente généralement des inconvénients en termes de masse, d'encombrement, de complexité, de coût et de fiabilité.

Il existe par conséquent un besoin d'optimisation des solutions existantes, afin d'assurer la gestion de la lubrification du réducteur en cas d'autorotation de la soufflante.

### EXPOSÉ DE L'INVENTION

Pour répondre au moins partiellement à ce besoin, l'invention a tout d'abord pour objet un ensemble pour turbomachine d'aéronef, selon la revendication 1, l'ensemble comprenant un réducteur d'entraînement de soufflante de la turbomachine, ainsi qu'un système de lubrification comportant :
- une enceinte de réducteur, lubrifiée et renfermant le réducteur d'entraînement de soufflante ;
- un réservoir de lubrifiant ;
- un circuit d'alimentation en lubrifiant reliant le réservoir à l'enceinte de réducteur, le circuit d'alimentation comprenant une pompe d'alimentation en lubrifiant ;
- un circuit de récupération de lubrifiant reliant l'enceinte de réducteur au réservoir, le circuit de récupération comprenant une pompe de récupération de lubrifiant provenant de l'enceinte de réducteur.

Selon l'invention, le circuit de récupération de lubrifiant comporte un distributeur de lubrifiant commandé, comprenant :
- une entrée de lubrifiant communiquant avec une sortie de lubrifiant de l'enceinte de réducteur ;
- une entrée d'air ; et
- une sortie de distributeur communiquant avec la pompe de récupération,
le distributeur de lubrifiant commandé étant configuré de manière à pouvoir adopter plusieurs configurations, parmi lesquelles :
- une configuration de récupération de lubrifiant, dans laquelle le distributeur fait communiquer son entrée de lubrifiant avec sa sortie, et interdit la communication entre son entrée d'air et sa sortie ; et
- une configuration de blocage du lubrifiant dans l'enceinte, configuration dans laquelle le distributeur fait communiquer son entrée d'air avec sa sortie, et interdit la communication entre son entrée de lubrifiant et sa sortie.

L'invention permet ainsi d'assurer de manière simple, fiable et performante une lubrification convenable du réducteur en cas d'autorotation de la soufflante. En effet, lorsque le distributeur est basculé en configuration de blocage, le lubrifiant est maintenu dans l'enceinte de réducteur, de laquelle il ne peut s'échapper. De plus, le faible débit de lubrifiant émanant de la pompe d'alimentation permet d'ajouter du lubrifiant dans l'enceinte, de manière à assurer le barbotage d'au moins une partie de la pignonnerie de ce réducteur.

En outre, dans cette configuration de blocage adoptée par le distributeur de lubrifiant, la pompe de récupération aspire de l'air depuis l'entrée d'air du distributeur, ce qui permet d'éviter de créer le vide dans le circuit de récupération de lubrifiant.

En particulier, l'invention se révèle avantageuse en ce qu'elle ne requiert pas l'intégration d'une pompe ou d'un réservoir supplémentaire pour assurer la lubrification du réducteur en conditions d'autorotation.

L'invention présente par ailleurs au moins l'une des caractéristiques optionnelles suivantes, prises isolément ou en combinaison.

De préférence, le distributeur de lubrifiant est commandé en fonction de la pression de lubrifiant dans le circuit d'alimentation en lubrifiant. En effet, une pression élevée de lubrifiant dans ce circuit témoigne d'un fonctionnement normal de la pompe d'alimentation, et donc de l'introduction d'un débit normal au sein de l'enceinte de réducteur, permettant de lubrifier convenablement le réducteur de la turbomachine en fonctionnement. A l'inverse, une faible pression de lubrifiant dans le circuit d'alimentation témoigne d'un fonctionnement au ralenti de la pompe d'alimentation, observé par exemple lors d'une phase d'autorotation de la soufflante. Dans ce cas, le débit de lubrifiant introduit dans l'enceinte peut s'avérer insuffisant pour lubrifier le réducteur dont la pignonnerie continue de tourner durant la phase d'autorotation. Par conséquent, une pression élevée de lubrifiant au sein du circuit d'alimentation doit conduire à amener le distributeur dans sa configuration de récupération de lubrifiant, tandis qu'une pression plus faible, par exemple chutant en dessous d'une valeur seuil, doit conduire à amener le distributeur dans sa configuration de blocage du lubrifiant.

Si l'invention prévoit préférentiellement de commander le distributeur de lubrifiant en fonction de la pression de lubrifiant dans le circuit d'alimentation, d'autres solutions de commande restent envisageables. Il s'agit par exemple d'une solution visant à détecter les phases d'autorotation, par exemple à l'aide d'un capteur de vitesse de rotation de la soufflante.

De préférence, le distributeur de lubrifiant comporte un corps, ainsi qu'un organe monté mobile dans le corps entre une première position amenant le distributeur dans la configuration de récupération de lubrifiant, et une seconde position amenant le distributeur dans la configuration de blocage du lubrifiant dans l'enceinte, l'organe mobile étant soumis à un premier effort appliqué par une élément élastique de rappel forçant cet organe mobile vers sa seconde position, et un second effort de pression appliqué par du lubrifiant prélevé sur le circuit d'alimentation, et forçant cet organe mobile vers sa première position. Il s'agit ici d'une solution mécanique / hydraulique, particulièrement simple et fiable.

De préférence, le distributeur prend la forme d'un vérin dont le cylindre est formé par le corps et dont le piston est formé par l'organe mobile. De plus, l'entrée de lubrifiant, l'entrée d'air, et la sortie du distributeur sont des orifices pratiqués à travers le cylindre. De préférence, le piston formé par l'organe mobile comporte deux têtes de piston entre lesquelles est définie une chambre de circulation de fluide.

Il est noté que si la solution mécanique / hydraulique présentée ci-dessus est préférée, une solution électrique reste envisageable, par exemple en mettant en oeuvre un capteur de pression de lubrifiant au sein du circuit d'alimentation.

De préférence, le circuit d'alimentation comporte un échangeur de chaleur à travers lequel circule le lubrifiant.

De préférence, l'ensemble comporte :
- au moins un palier de roulement d'arbre de turbomachine ;
- au moins une enceinte moteur lubrifiée renfermant le palier roulement.

Par ailleurs, préférentiellement :
- le circuit d'alimentation en lubrifiant relie également le réservoir à chaque enceinte moteur lubrifiée ; et
- le circuit de récupération de lubrifiant relie également chaque enceinte moteur au réservoir, le circuit de récupération comprenant en outre une pompe de récupération de lubrifiant associée à chaque enceinte moteur.

De préférence, l'ensemble comporte :
- un boîtier d'accessoires de la turbomachine ;
- une enceinte de boîtier d'accessoires, lubrifiée et renfermant le boîtier d'accessoires. Par ailleurs :
- le circuit d'alimentation en lubrifiant relie également le réservoir à l'enceinte de boîtier d'accessoires ; et
- le circuit de récupération de lubrifiant relie également l'enceinte de boîtier d'accessoires au réservoir, le circuit de récupération comprenant en outre une pompe de récupération de lubrifiant provenant de l'enceinte de boîtier d'accessoires.

Préférentiellement, la pompe d'alimentation, la pompe de récupération de lubrifiant provenant de l'enceinte de boîtier d'accessoires, ainsi que la pompe de récupération de lubrifiant provenant de l'enceinte de réducteur, sont entraînées mécaniquement par le boîtier d'accessoires.

Bien évidemment, les deux solutions préférées décrites ci-dessus sont combinables, à savoir que l'ensemble selon l'invention intègre préférentiellement toutes les enceintes décrites ci-dessus, parmi lesquelles une ou plusieurs enceintes moteur lubrifiées, ainsi que les éléments décrits ci-dessus, associés à ces enceintes.

L'invention a également pour objet une turbomachine d'aéronef comprenant un tel ensemble, la turbomachine comportant une soufflante entraînée par le réducteur de cet ensemble, un compresseur, et l'entrée d'air du distributeur de lubrifiant communiquant préférentiellement avec le compresseur, de préférence un compresseur haute pression. Alternativement, l'entrée d'air du distributeur de lubrifiant peut être reliée à la veine secondaire de la turbomachine, lorsque celle-ci dispose d'une conception à double flux. A cet égard, il est noté que la turbomachine est préférentiellement un turboréacteur à double flux, et à double corps.

Enfin, il est noté que la turbomachine comporte préférentiellement une
un arbre moteur, de préférence un arbre haute pression, entraînant mécaniquement le boîtier d'accessoires.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue schématique de côté d'un turboréacteur selon l'invention ;
[Fig. 2] représente une vue schématique de côté d'un ensemble selon un mode de réalisation préféré de l'invention, cet ensemble équipant le turboréacteur de la figure précédente ;
[Fig. 3] représente une vue schématique de côté d'une partie de l'ensemble montré sur la figure précédente, avec un distributeur de lubrifiant montré en configuration de récupération de lubrifiant, adoptée durant des conditions normales de fonctionnement du turboréacteur;
[Fig. 4] représente une vue similaire à la précédente, avec le distributeur de lubrifiant montré en configuration transitoire ; et
[Fig. 5] représente une vue similaire à la précédente, avec le distributeur de lubrifiant montré en configuration de blocage de lubrifiant, telle qu'adoptée en cas d'autorotation de la soufflante du turboréacteur.

### EXPOSÉ DÉTAILLÉ DE MODES DE RÉALISATION PRÉFÉRÉS

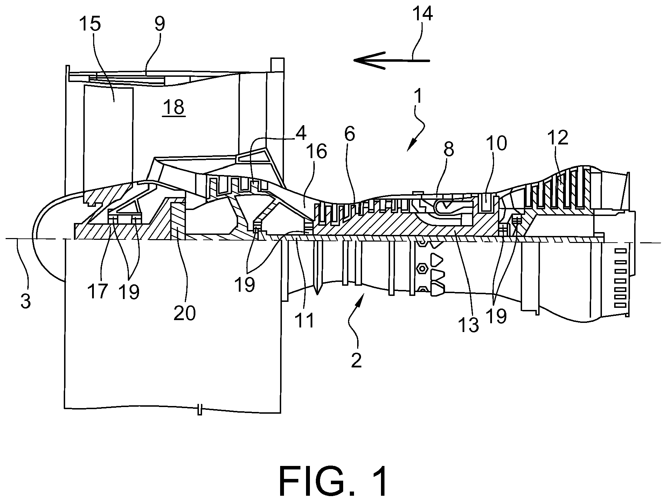

En référence à la figure 1, il est représenté un turboréacteur 1 à double flux et à double corps. Le turboréacteur 1 comporte de façon classique un générateur de gaz 2, de part et d'autre duquel sont agencés un compresseur basse pression 4, et une turbine basse pression 12. Le générateur de gaz 2 comprend un compresseur haute pression 6, une chambre de combustion 8 et une turbine haute pression 10. Par la suite, les termes « avant » et « arrière » sont considérés selon une direction 14 opposée à la direction d'écoulement principale des gaz au sein du turboréacteur, cette direction 14 étant parallèle à l'axe longitudinal 3 du turboréacteur. Les termes « amont » et « aval » sont eux, en revanche, considérés selon la direction d'écoulement principale des gaz à travers le turboréacteur.

Le compresseur basse pression 4 et la turbine basse pression 12 forment un corps basse pression, et sont reliés l'un à l'autre par un arbre basse pression 11 centré sur l'axe 3. De même, le compresseur haute pression 6 et la turbine haute pression 10 forment un corps haute pression, et sont reliés l'un à l'autre par un arbre haute pression 13 centré sur l'axe 3 et agencé autour de l'arbre basse pression 11. Les arbres sont supportés par des paliers de roulement 19, qui sont lubrifiés en étant agencés dans des enceintes d'huile. Il en est de même pour le moyeu de soufflante 17, également supporté par des paliers de roulement 19.

Le turboréacteur 1 comporte par ailleurs, à l'avant du générateur de gaz 2 et du compresseur basse pression 4, une soufflante 15 qui est ici agencée directement à l'arrière d'un cône d'entrée d'air du moteur. La soufflante 15 est rotative selon l'axe 3, et entourée d'un carter de soufflante 9. Cette soufflante n'est pas entraînée directement par l'arbre basse pression 11, mais entraînée indirectement par cet arbre via un réducteur 20, ce qui lui permet de tourner avec une vitesse plus lente. Comme cela sera détaillé ci-après, le réducteur 20 est également logé dans une enceinte d'huile pour permettre sa lubrification.

En outre, le turboréacteur 1 définit une veine primaire 16 destinée à être traversée par un flux primaire, ainsi qu'une veine secondaire 18 destinée à être traversée par un flux secondaire situé radialement vers l'extérieur par rapport au flux primaire.

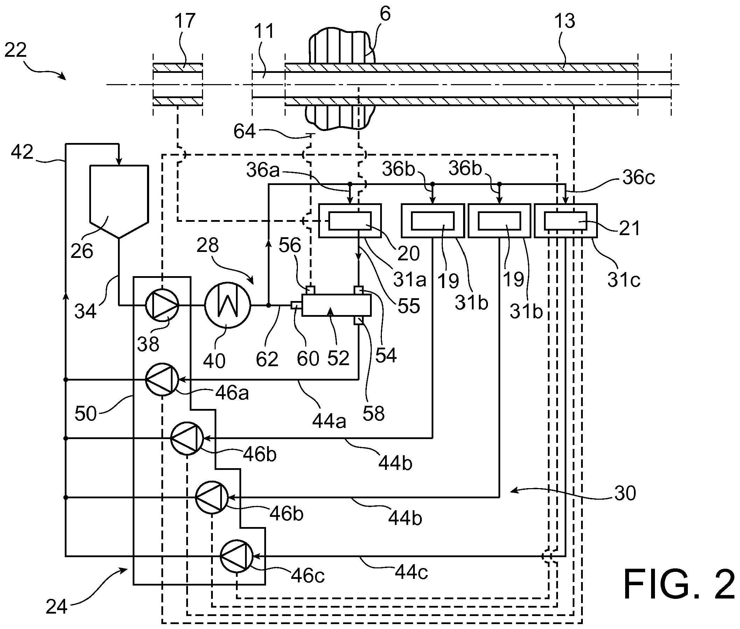

En référence à présent à la figure 2, il est représenté un ensemble 22 spécifique à l'invention, comprenant le réducteur 20, les paliers de roulement 19, un boîtier d'accessoires 21, ainsi qu'un système 24 permettant sa lubrification.

Le boîtier d'accessoires 21, également dénommé AGB (de l'anglais *« Accessory Gear Box »)*, est entraîné mécaniquement par l'arbre haute pression 13. De manière conventionnelle, il est configuré pour entraîner à son tour plusieurs équipements du turboréacteur, parmi lesquels des pompes de l'ensemble 22 qui seront décrites ci-après.

Le système de lubrification 24 comporte globalement un réservoir de lubrifiant 26, un circuit d'alimentation en lubrifiant 28, un circuit de récupération de lubrifiant 30, et des enceintes lubrifiées 31a, 31b, 31c. Parmi ces enceintes, il est prévu une première enceinte lubrifiée 31a, dite enceinte de réducteur car elle renferme le réducteur 20 destiné à être lubrifié dans cette enceinte. Il est également prévu plusieurs secondes enceintes lubrifiées 31b, ici deux secondes enceintes, dites enceintes moteur et renfermant chacune un ou plusieurs paliers de roulement 19. Il est enfin prévu une troisième enceinte lubrifiée 31c, dite enceinte de boîtier d'accessoires car elle renferme le boîtier 21 destiné à être lubrifié dans cette enceinte.

Le circuit d'alimentation en lubrifiant 28 relie le réservoir 26 à chacune des enceintes 31a, 31b, 31c, par exemple via une canalisation commune 34 à partir de laquelle s'étendent des raccords 36a, 36b, 36c, alimentant respectivement les enceintes 31a, 31b, 31c.

La canalisation commune 34 du circuit d'alimentation 28 est équipée d'une pompe d'alimentation en lubrifiant 38, et d'un échangeur de chaleur 40 à travers lequel passe le lubrifiant, de préférence de l'huile. Cet échangeur 40 est par exemple du type échangeur air/huile. Sur la canalisation commune 34, la pompe d'alimentation 38 se trouve agencée entre le réservoir 26 et l'échangeur 40.

Le circuit de récupération de lubrifiant 30 comporte une canalisation commune 42, communiquant avec une entrée du réservoir 26 et sur laquelle viennent se relier des canalisations spécifiques à chaque enceinte. Ainsi, il est prévu une première canalisation 44a reliant l'enceinte de réducteur 31a à la canalisation commune 42. Cette première canalisation 44a est équipée d'une pompe 46a de récupération de lubrifiant provenant de l'enceinte de réducteur 31a. De manière analogue, il est prévu deux secondes canalisations 44b reliant chaque enceinte moteur 31b à la canalisation commune 42. Chaque seconde canalisation 44b est équipée d'une pompe 46b de récupération de lubrifiant provenant de l'enceinte moteur 31b. Enfin, il est prévu une troisième canalisation 44c reliant l'enceinte de boîtier 31c à la canalisation commune 42. Cette troisième canalisation 44c est équipée d'une pompe 46c de récupération de lubrifiant provenant de l'enceinte de boîtier 31c.

Toutes les pompes 38, 46a, 46b, 46c mentionnées ci-dessus sont de préférence entraînées mécaniquement par le boîtier d'accessoires 21. Préférentiellement, elles font partie d'un même groupe de pompes, dit groupe de lubrification référencé 50 sur la figure 2. Ces pompes 38, 46a, 46b, 46c sont toutes entraînées mécaniquement par le boîtier d'accessoires 21.

L'une des particularités de l'invention réside dans la présence d'un distributeur de lubrifiant commandé 52, équipant la première canalisation 44a en sortie de l'enceinte de réducteur 31a. Le distributeur 52 comporte une entrée de lubrifiant 54 communiquant avec une sortie de lubrifiant 55 de l'enceinte de réducteur 31. Il comprend également une entrée d'air 56, ainsi qu'une sortie de distributeur 58 communiquant avec la pompe de récupération 46a.

L'entrée d'air 56 est alimentée en air, préférablement en air ambiant, par exemple via une canalisation 64 qui se raccorde sur ou à proximité d'un compartiment d'une zone inter-veines de la turbomachine, aussi appelé « compartiment Core ». Par air ambiant, on entend de l'air dont la pression est au moins approximativement égale à celle de l'air extérieur à la turbomachine. Alternativement, la canalisation 64 se raccorde sur la veine secondaire du turboréacteur, ou encore sur un compartiment d'une nacelle de la turbomachine qui est à l'air ambiant, par exemple un compartiment de soufflante aussi appelé « compartiment fan » .

Le distributeur de lubrifiant commandé 52, agencé entre l'enceinte de réducteur 31a et la pompe 46a, présente une conception telle qu'il est commandé de manière passive par la pression de lubrifiant dans la canalisation commune 34 du circuit d'alimentation 28. Pour ce faire, le distributeur 52 comporte une entrée secondaire de lubrifiant 60, communiquant avec la canalisation commune 34 via un raccord 62.

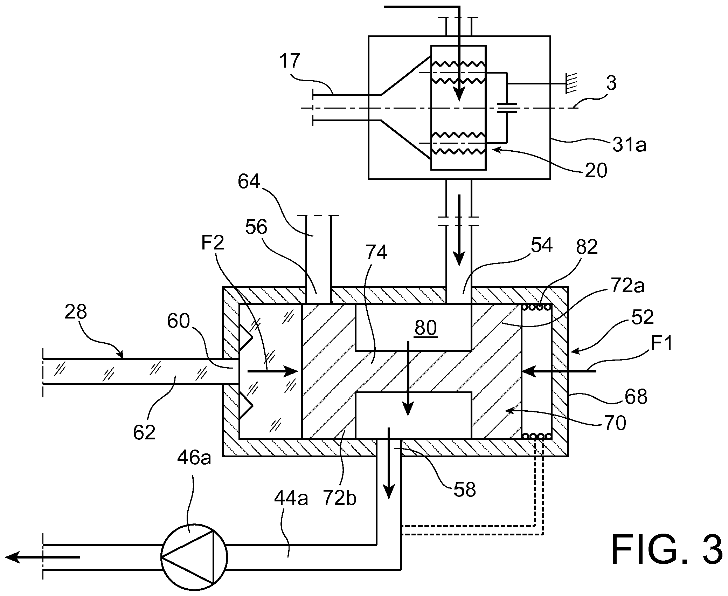

En référence à présent à la figure 3, il est représenté le distributeur de lubrifiant 52 de manière plus détaillée. Sur cette figure 3, le distributeur 52 est montré dans une configuration de récupération de lubrifiant, adoptée durant des conditions normales de fonctionnement du turboréacteur. Ce distributeur en forme de vérin comporte un corps 68 formant le cylindre du vérin, ainsi qu'un organe 70 monté mobile dans le corps 68, de façon à former le piston du vérin.

L'entrée de lubrifiant 54, l'entrée secondaire de lubrifiant 60, l'entrée d'air 56, et la sortie du distributeur 58 correspondant à des orifices pratiqués à travers le cylindre creux 68, dans lequel le piston 70 est mobile en translation. Ce piston 70 comporte deux têtes de piston opposées 72a, 72b reliées par un organe de liaison central 74, de plus faible diamètre. Par conséquent, il est défini entre les deux têtes de piston 72a, 72b une chambre annulaire de circulation de fluide 80, également délimitée intérieurement par l'organe de liaison central 74, et extérieurement par le cylindre 68.

La première tête de piston 72a est associée à l'entrée de lubrifiant 54, qu'elle est capable d'obturer ou de libérer en fonction de la position du piston 70 dans le cylindre 68. Cette première tête de piston 72a est soumise à un premier effort F1 appliqué par un élément élastique de rappel, par exemple un ressort de compression 82 à boudin. Ce ressort 82 est contraint entre une extrémité axiale du cylindre 68, et une surface extérieure de la première tête de piston 72a.

Par ailleurs, la seconde tête de piston 72b est associée à l'entrée d'air 56, qu'elle est capable d'obturer ou de libérer en fonction de la position du piston 70 dans le cylindre 68. Cette seconde tête de piston 72b est soumise à un second effort de pression F2 appliqué par le lubrifiant pénétrant dans le cylindre 68, depuis l'entrée secondaire 60.

Sur la figure 3, l'effort de pression F2 surmonte l'effort F1 du ressort 82, de sorte que le piston 70 se trouve dans une première position amenant le distributeur 52 dans sa configuration de récupération de lubrifiant, adoptée durant des conditions normales de fonctionnement du turboréacteur. Dans cette configuration de récupération de lubrifiant, la seconde tête de piston 72b se trouve agencée axialement entre l'entrée d'air 56 et la sortie de distributeur 58, de sorte que la communication entre ces deux orifices 56, 58 est interdite. En revanche, le piston 70 est agencé de telle manière que l'entrée de lubrifiant 54 et la sortie de distributeur 58 débouchent toutes les deux dans la chambre annulaire 80, autorisant ainsi la communication entre ces orifices 54, 58.

Par conséquent, dans cette configuration, la pompe de récupération 46a aspire uniquement du lubrifiant provenant l'enceinte de réducteur 31a.

Le second effort de pression F2 force le piston 70 vers la première position représentée sur la figure 3, alors que le premier effort F1 délivré par le ressort 82 force ce même piston 70 vers une seconde position opposée, amenant le distributeur 52 dans une configuration de blocage de lubrifiant.

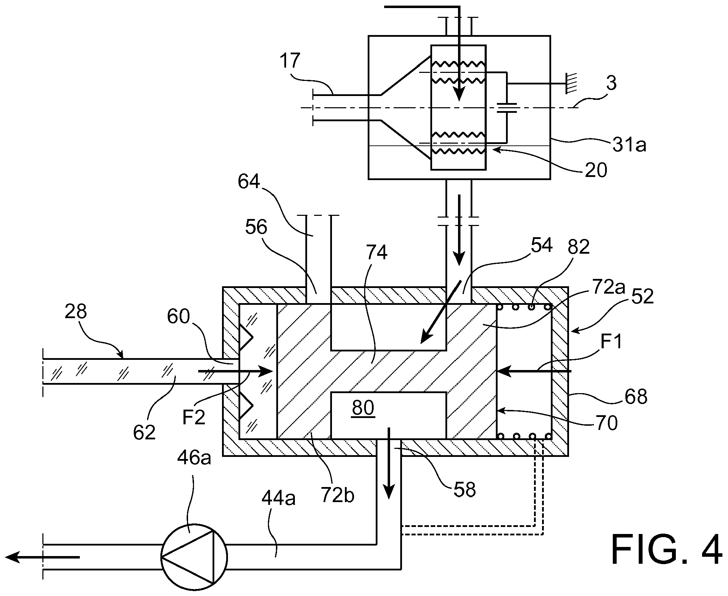

En effet, lorsque la pression de lubrifiant baisse dans le circuit d'alimentation 28, le second effort de pression F2 diminue, ce qui conduit le piston 70 à se déplacer dans la direction de l'effort F1 délivré par le ressort 82. La figure 4 montre une configuration intermédiaire dans laquelle ce déplacement du piston 70 conduit la première tête de piston 72a à obturer presque intégralement l'entrée de lubrifiant 54, tandis que la seconde tête de piston 72b obture intégralement l'entrée d'air 56. Cette configuration intermédiaire est adoptée lorsque la pression du lubrifiant atteint une valeur seuil, en dessous de laquelle le distributeur bascule dans sa configuration de blocage du lubrifiant. Effectivement, une poursuite de la baisse de pression du lubrifiant dans le raccord 62 conduit à un déplacement supplémentaire du piston 70, dont la première tête de piston 72a obture alors intégralement l'entrée de lubrifiant 54, tandis que la seconde tête de piston 72b libère légèrement l'entrée d'air 56.

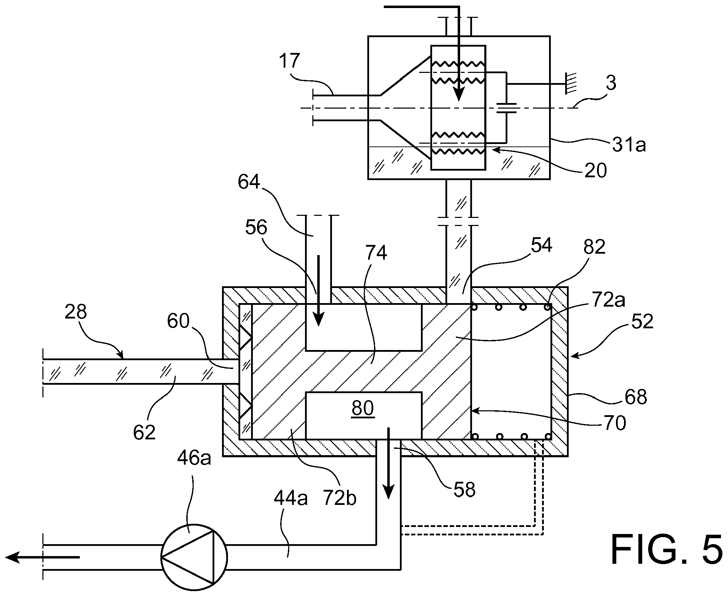

La figure 5 montre le piston 70 dans la seconde position, amenant le distributeur 52 dans sa configuration de blocage du lubrifiant, adopté en conditions d'autorotation de la soufflante. Dans ces conditions, la pompe d'alimentation en lubrifiant est très faiblement entraînée par l'arbre haute pression via le boîtier d'accessoires, impliquant une faible pression de lubrifiant dans le circuit d'alimentation 28. Au niveau du piston 70, l'effort de pression F2 se trouve ainsi surmonté par l'effort F1 du ressort 82 davantage détendu. Dans cette configuration de blocage du lubrifiant, la première tête de piston 72a obture l'entrée de lubrifiant 54, de sorte que la communication entre cette entrée 54 et la sortie de distributeur 58 est interdite. En revanche, le piston 70 est agencé de telle manière que l'entrée d'air 56 et la sortie de distributeur 58 débouchent toutes les deux dans la chambre annulaire 80, autorisant ainsi la communication entre ces orifices 56, 58.

Par conséquent, dans cette configuration, la pompe de récupération 46a aspire uniquement de l'air, par exemple de l'air ambiant, et le lubrifiant est bloqué dans l'enceinte 31a. L'aspiration d'air permet avantageusement d'éviter de créer le vide dans la canalisation 44a et la chambre annulaire 80, lorsque le lubrifiant n'est plus aspiré mais maintenu dans l'enceinte 31a.

Le fait d'aspirer de l'air ne se révèle pas nuisible pour la pompe de récupération 46a, puisque les besoins éventuels en lubrification de cette pompe 46a peuvent être assurés par le faible débit d'huile aspiré par les autres pompes 46b, 46c du groupe de lubrification 50.

Dans les phases d'autorotation de la soufflante, toutes les pompes 38, 46a, 46b, 46b fonctionnent au ralenti, mais un faible débit d'huile peut continuer à circuler à travers le circuit d'alimentation 28, via la pompe 38 et en direction de l'enceinte 31a. Cela permet de faire barboter le réducteur 20 dans le lubrifiant qui s'accumule au fond de cette enceinte 31a, comme cela a été schématisé sur la figure 5.

Eventuellement, durant une phase d'autorotation, si un niveau maximal de remplissage ne doit pas être dépassé dans l'enceinte de réducteur 31a, un conduit de trop plein de lubrifiant peut y être implanté, sans sortir du cadre de l'invention. Préférablement, ce conduit de trop plein est muni d'un clapet de surpression pour évacuer le trop plein d'huile seulement si la pression dans l'enceinte devient supérieure à une valeur prédéfinie comme critique. Sans ce clapet, il pourrait exister un risque de dépressuriser l'enceinte via le conduit de trop plein pendant l'autorotation de la soufflante.

Bien entendu, diverses modifications peuvent être apportées par l'homme du métier à l'invention qui vient d'être décrite, uniquement à titre d'exemples non limitatifs et dont la portée est délimitée par les revendications annexées.

## Revendications

1. Ensemble (22) pour turbomachine d'aéronef, l'ensemble comprenant un réducteur (20) d'entraînement de soufflante (15) de la turbomachine, ainsi qu'un système de lubrification (24) comportant :
- une enceinte de réducteur (31a), lubrifiée et renfermant le réducteur d'entraînement de soufflante (20) ;
- un réservoir de lubrifiant (26) ;
- un circuit d'alimentation en lubrifiant (28) reliant le réservoir (26) à l'enceinte de réducteur (31a), le circuit d'alimentation comprenant une pompe d'alimentation en lubrifiant (38) ;
- un circuit de récupération de lubrifiant (30) reliant l'enceinte de réducteur (31a) au réservoir (26), le circuit de récupération comprenant une pompe (46a) de récupération de lubrifiant provenant de l'enceinte de réducteur (31a),
**caractérisé en ce que** le circuit de récupération de lubrifiant (30) comporte un distributeur de lubrifiant commandé (52), comprenant :
- une entrée de lubrifiant (54) communiquant avec une sortie de lubrifiant (55) de l'enceinte de réducteur (31a) ;
- une entrée d'air (56) ; et
- une sortie de distributeur (58) communiquant avec la pompe de récupération (46a),
le distributeur de lubrifiant commandé (52) étant configuré de manière à pouvoir adopter plusieurs configurations, parmi lesquelles :
- une configuration de récupération de lubrifiant, dans laquelle le distributeur (52) fait communiquer son entrée de lubrifiant (54) avec sa sortie (58), et interdit la communication entre son entrée d'air (56) et sa sortie (58) ; et
- une configuration de blocage du lubrifiant dans l'enceinte, configuration dans laquelle le distributeur (52) fait communiquer son entrée d'air (56) avec sa sortie (58), et interdit la communication entre son entrée de lubrifiant (54) et sa sortie (58).

2. Ensemble selon la revendication 1, **caractérisé en ce que** le distributeur de lubrifiant (52) est commandé en fonction de la pression de lubrifiant dans le circuit d'alimentation en lubrifiant (28).

3. Ensemble selon la revendication 2, **caractérisé en ce que** le distributeur de lubrifiant comporte un corps (68), ainsi qu'un organe (70) monté mobile dans le corps entre une première position amenant le distributeur dans la configuration de récupération de lubrifiant, et une seconde position amenant le distributeur dans la configuration de blocage du lubrifiant dans l'enceinte (31a), l'organe mobile (70) étant soumis à un premier effort (F1) appliqué par une élément élastique de rappel (82) forçant cet organe mobile vers sa seconde position, et un second effort de pression (F2) appliqué par du lubrifiant prélevé sur le circuit d'alimentation (28), et forçant cet organe mobile vers sa première position.

4. Ensemble selon la revendication 3, **caractérisé en ce que** le distributeur (52) prend la forme d'un vérin dont le cylindre (68) est formé par le corps et dont le piston (70) est formé par l'organe mobile, l'entrée de lubrifiant (54), l'entrée d'air (56), et la sortie du distributeur (58) étant des orifices pratiqués à travers le cylindre (68).

5. Ensemble selon la revendication 4, **caractérisé en ce que** le piston (70) formé par l'organe mobile comporte deux têtes de piston (72a, 72b) entre lesquelles est définie une chambre de circulation de fluide (80).

6. Ensemble selon l'une quelconque des revendications précédentes, **caractérisé en ce que** le circuit d'alimentation (28) comporte un échangeur de chaleur (40) à travers lequel circule le lubrifiant.

7. Ensemble selon l'une quelconque des revendications précédentes, **caractérisé en ce qu'**il comporte :
- au moins un palier de roulement (19) d'arbre de turbomachine ;
- au moins une enceinte moteur lubrifiée (31b) renfermant le palier roulement (19).

8. Ensemble selon l'une quelconque des revendications précédentes, **caractérisé en ce qu'**il comporte :
- un boîtier d'accessoires (21) de la turbomachine ;
- une enceinte de boîtier d'accessoires (31c), lubrifiée et renfermant le boîtier d'accessoires (21) ;
**en ce que**
- le circuit d'alimentation en lubrifiant (28) relie également le réservoir (26) à l'enceinte de boîtier d'accessoires (31c) ; et
- le circuit de récupération de lubrifiant (30) relie également l'enceinte de boîtier d'accessoires (31c) au réservoir (26), le circuit de récupération (30) comprenant en outre une pompe de récupération de lubrifiant (46c) provenant de l'enceinte de boîtier d'accessoires (31c),
et **en ce que** préférentiellement, la pompe d'alimentation (38), la pompe de récupération de lubrifiant (46c) provenant de l'enceinte de boîtier d'accessoires (31c), ainsi que la pompe de récupération de lubrifiant (46a) provenant de l'enceinte de réducteur (31a), sont entraînées mécaniquement par le boîtier d'accessoires (21).

9. Turbomachine (1) d'aéronef comprenant un ensemble (22) selon l'une quelconque des revendications précédentes, la turbomachine comportant une soufflante (15) entraînée par le réducteur (20) de cet ensemble, un compresseur (6), et l'entrée d'air (56) du distributeur de lubrifiant (52) communiquant préférentiellement avec le compresseur (6), qui est de préférence un compresseur haute pression.

10. Turbomachine selon la revendication 9, combinée à la revendication 8, **caractérisée en ce qu'**elle comporte un arbre moteur (13), de préférence un arbre haute pression, entraînant mécaniquement le boîtier d'accessoires (21).

## Patentansprüche

1. Anordnung (22) für eine Turbomaschine für Flugzeuge, wobei die Anordnung ein Untersetzungsgetriebe (20) zum Antreiben des Gebläses (15) der Turbomaschine sowie ein Schmiersystem (24) umfasst, Folgendes enthaltend:
- ein Untersetzungsgetriebegehäuse (31a), das geschmiert ist und das Untersetzungsgetriebe zum Antreiben des Gebläses (20) umschließt;
- einen Schmiermitteltank (26);
- einen Schmiermittelversorgungskreislauf (28), der den Tank (26) mit dem Untersetzungsgetriebegehäuse (31a) verbindet, wobei der Versorgungskreislauf eine Schmiermittelversorgungspumpe (38) umfasst;
- einen Schmiermittelrückgewinnungskreislauf (30), der das Untersetzungsgetriebegehäuse (31a) mit dem Tank (26) verbindet, wobei der Rückgewinnungskreislauf eine Pumpe (46a) zum Rückgewinnen von Schmiermittel aus dem Untersetzungsgetriebegehäuse (31a) umfasst,
**dadurch gekennzeichnet, dass** der Schmiermittelrückgewinnungskreislauf (30) eine gesteuerte Schmiermittelabgabevorrichtung (52) enthält, die Folgendes umfasst:
- einen Schmiermitteleinlass (54), der mit einem Schmiermittelauslass (55) des Untersetzungsgetriebegehäuses (31a) in Verbindung steht;
- einen Lufteinlass (56); und
- einen Abgabevorrichtungsauslass (58), der mit der Rückgewinnungspumpe (46a) in Verbindung steht,
wobei die gesteuerte Schmiermittelabgabevorrichtung (52) derart konfiguriert ist, dass sie mehrere Konfigurationen annehmen kann, darunter:
- eine Konfiguration zum Rückgewinnen des Schmiermittels, in der die Abgabevorrichtung (52) ihren Schmiermitteleinlass (54) mit ihrem Auslass (58) verbindet und die Verbindung zwischen ihrem Lufteinlass (56) und ihrem Auslass (58) verhindert; und
- eine Konfiguration zum Blockieren des Schmiermittels im Gehäuse, eine Konfiguration, in der die Abgabevorrichtung (52) ihren Lufteinlass (56) mit ihrem Auslass (58) verbindet und die Verbindung zwischen ihrem Schmiermitteleinlass (54) und ihrem Auslass (58) verhindert.

2. Anordnung nach Anspruch 1, **dadurch gekennzeichnet, dass** die Schmiermittelabgabevorrichtung (52) abhängig vom Schmiermitteldruck im Schmiermittelversorgungskreislauf (28) gesteuert wird.

3. Anordnung nach Anspruch 2, **dadurch gekennzeichnet, dass** die Schmiermittelabgabevorrichtung einen Körper (68) sowie ein Element (70) umfasst, das zwischen einer ersten Position, die die Abgabevorrichtung in die Schmiermittelrückgewinnungskonfiguration bringt, und einer zweiten Position, die die Abgabevorrichtung in die Schmiermittelblockierkonfiguration im Gehäuse (31a) bringt, beweglich im Körper montiert ist, wobei das bewegliche Element (70) einer ersten Kraft (F1), die von einem elastischen Rückstellelement (82) ausgeübt wird, das das bewegliche Element in seine zweite Position zwingt, und einer zweiten Druckkraft (F2) ausgesetzt ist, die von dem aus dem Versorgungskreislauf (28) entnommenen Schmiermittel ausgeübt wird und das bewegliche Element in seine erste Position zwingt.

4. Anordnung nach Anspruch 3, **dadurch gekennzeichnet, dass** die Abgabevorrichtung (52) die Form eines Stellglieds hat, dessen Zylinder (68) durch den Körper gebildet wird und dessen Kolben (70) durch das bewegliche Element gebildet wird, wobei der Schmiermitteleinlass (54), der Lufteinlass (56) und der Abgabevorrichtungsauslass (58) Öffnungen sind, die durch den Zylinder (68) hindurch ausgebildet sind.

5. Anordnung nach Anspruch 4, **dadurch gekennzeichnet, dass** der durch das bewegliche Element gebildete Kolben (70) zwei Kolbenköpfe (72a, 72b) umfasst, zwischen denen eine Fluidzirkulationskammer (80) definiert ist.

6. Anordnung nach einem der vorhergehenden Ansprüche, **dadurch gekennzeichnet, dass** der Versorgungskreislauf (28) einen Wärmetauscher (40) enthält, durch den das Schmiermittel zirkuliert.

7. Anordnung nach einem der vorhergehenden Ansprüche, **dadurch gekennzeichnet, dass** sie Folgendes enthält:
- mindestens ein Wälzlager (19) der Turbomaschinenwelle;
- mindestens ein geschmiertes Motorgehäuse (31b), das das Wälzlager (19) umschließt.

8. Anordnung nach einem der vorhergehenden Ansprüche, **dadurch gekennzeichnet, dass** sie Folgendes enthält:
- ein Hilfsgetriebe (21) der Turbomaschine;
- ein Hilfsgetriebegehäuse (31c), das geschmiert ist und das Hilfsgetriebe (21) umschließt;
dadurch, dass
- der Schmiermittelversorgungskreislauf (28) auch den Tank (26) mit dem Hilfsgetriebegehäuse (31c) verbindet; und
- der Schmiermittelrückgewinnungskreislauf (30) auch das Hilfsgetriebegehäuse (31c) mit dem Tank (26) verbindet, wobei der Rückgewinnungskreislauf (30) ferner eine Pumpe (46c) zum Rückgewinnen von Schmiermittel aus dem Hilfsgetriebegehäuse (31c) umfasst,
und dadurch, dass die Versorgungspumpe (38), die Pumpe (46c) zum Rückgewinnen von Schmiermittel aus dem Hilfsgetriebegehäuse (31c) sowie die Pumpe (46a) zum Rückgewinnen von Schmiermittel aus dem Untersetzungsgetriebegehäuse (31c) mechanisch vom Nebengetriebe (21) angetrieben werden.

9. Turbomaschine (1) für Flugzeuge, umfassend eine Anordnung (22) nach einem der vorhergehenden Ansprüche, wobei die Turbomaschine ein durch das Untersetzungsgetriebe (20) der Anordnung angetriebenes Gebläse (15), einen Kompressor (6) und einen Lufteinlass (56) der Schmiermittelabgabevorrichtung (52), der vorzugsweise mit dem Kompressor (6) in Verbindung steht, welcher vorzugsweise ein Hochdruckkompressor ist, umfasst.

10. Turbomaschine nach Anspruch 9, in Kombination mit Anspruch 8, **dadurch gekennzeichnet, dass** sie eine Motorwelle (13), vorzugsweise eine Hochdruckwelle, die das Hilfsgetriebe (21) mechanisch antreibt, enthält.

## Claims

1. An assembly (22) for an aircraft turbine engine, the assembly comprising a reduction gear (20) for driving the fan (15) of the turbine engine, as well as a lubrication system (24) including:
- a reduction gear enclosure (31a), lubricated and containing the fan drive reduction gear (20);
- a lubricant tank (26);
- a lubricant supply circuit (28) connecting the tank (26) to the reduction gear enclosure (31a), the supply circuit comprising a lubricant supply pump (38);
- a lubricant recovery circuit (30) connecting the reduction gear enclosure (31a) to the tank (26), the recovery circuit comprising a pump (46a) for recovering lubricant from the reduction gear enclosure (31a),
**characterised in that** the lubricant recovery circuit (30) includes a controlled lubricant dispenser (52), comprising:
- a lubricant inlet (54) communicating with a lubricant outlet (55) of the reduction gear enclosure (31a);
- an air inlet (56); and
- a dispenser outlet (58) communicating with the recovery pump (46a),
the controlled lubricant dispenser (52) being configured so as to be able to adopt several configurations, among which:
- a lubricant recovery configuration, in which the dispenser (52) communicates the lubricant inlet (54) thereof with the outlet (58) thereof, and prohibits the communication between the air inlet (56) thereof and the outlet (58) thereof; and
- a configuration for blocking the lubricant in the enclosure, a configuration in which the dispenser (52) communicates the air inlet (56) thereof with the outlet (58) thereof, and prohibits the communication between the lubricant inlet (54) thereof and the output (58) thereof.

2. The assembly according to claim 1, **characterised in that** the lubricant dispenser (52) is controlled depending on the lubricant pressure in the lubricant supply circuit (28).

3. The assembly according to claim 2, **characterised in that** the lubricant dispenser includes a body (68), as well as a member (70) which is movably mounted in the body between a first position bringing the dispenser into the lubricant recovery configuration, and a second position bringing the dispenser into the configuration for blocking the lubricant in the enclosure (31a), the movable member (70) being subjected to a first force (F1) applied by an elastic return element (82) forcing this movable member to its second position, and a second pressure force (F2) applied by the lubricant taken from the supply circuit (28), and forcing this movable member to its first position.

4. The assembly according to claim 3, **characterised in that** the dispenser (52) takes the form of an actuator whose cylinder (68) is formed by the body and whose piston (70) is formed by the movable member, the lubricant inlet (54), the air inlet (56), and the dispenser outlet (58) being orifices through the cylinder (68).

5. The assembly according to claim 4, **characterised in that** the piston (70) formed by the movable member includes two piston heads (72a, 72b) between which a fluid circulation chamber (80) is defined.

6. The assembly according to any one of the preceding claims, **characterised in that** the supply circuit (28) includes a heat exchanger (40) through which the lubricant circulates.

7. The assembly according to any one of the preceding claims, **characterised in that** it includes:
- at least one turbine engine shaft rolling bearing (19);
- at least one lubricated motor enclosure (31b) containing the rolling bearing (19).

8. The assembly according to any one of the preceding claims, **characterised in that** it includes:
- an accessory gearbox (21) of the turbine engine;
- an accessory gearbox enclosure (31c), lubricated and containing the accessory gearbox (21);
**in that**
- the lubricant supply circuit (28) also connects the tank (26) to the accessory gearbox enclosure (31c); and
- the lubricant recovery circuit (30) also connects the accessory gearbox enclosure (31c) to the tank (26), the recovery circuit (30) further comprising a pump (46c) for recovering lubricant from the accessory gearbox enclosure (31c),
and **in that** preferably, the supply pump (38), the pump (46c) for recovering lubricant from the accessory gearbox enclosure (31c), as well as the pump (46a) for recovering lubricant from the reduction gear enclosure (31a), are mechanically driven by the accessory gearbox (21).

9. An aircraft turbine engine (1) comprising an assembly (22) according to any one of the preceding claims, the turbine engine including a fan (15) driven by the reduction gear (20) of this assembly, a compressor (6), and the air inlet (56) of the lubricant dispenser (52) preferentially communicating with the compressor (6), which is preferably a high pressure compressor.

10. A turbine engine according to claim 9, combined with claim 8, **characterised in that** it includes a motor shaft (13), preferably a high pressure shaft, mechanically driving the accessory gearbox (21).
